# EUROPEAN PATENT SPECIFICATION

(11) **EP 2 570 725 B1**
(45) Date of publication and mention of the grant of the patent: **02.11.2016**
(21) Application number: 12166799.2
(22) Date of filing: 04.05.2012
(51) Int. Cl.: F23L 7/00

(54) **Oxygen supplying apparatus of a melting furnace**
Sauerstoffzufuhreinrichtung eines Schmelzofens
Dispositif d'injection d'oxygène dans un four de vitrification

(30) Priority: 19.09.2011 KR 20110094291
(43) Date of publication of application: 20.03.2013
(73) Proprietor: Korea Hydro & Nuclear Power Co., Ltd., Gyeongju-si Gyeongsangbuk-do 780-947 (KR)
(72) Inventor: Cho, Hyun Je, 305-345 Daejeon (KR); Kim, Deuk Man, Daejeon 305-734 (KR); Choi, Seok Mo, Sejong, 339-723 (KR); Kim, Cheon Woo, 305-390 Daejeon (KR); Hwang, Tae Won, 305-345 Daejeon (KR)
(74) Representative: Kransell & Wennborg KB

(56) References cited:
- EP-A1- 0 877 203
- FR-A5- 2 131 673
- US-A- 2 828 956
- US-A- 3 488 044
- US-A- 3 703 279
- US-A- 3 976 238
- US-A- 4 449 701
- US-A- 4 550 898
- US-A- 4 941 646
- US-A- 5 217 363
- US-A- 5 267 850

## Description

### BACKGROUND OF THE INVENTION

### 1. Field of the Invention

The present invention relates to an oxygen supplying apparatus of a melting furnace, and more particularly, to an oxygen supplying apparatus of a melting furnace, in which the oxygen supplying apparatus inserted to the melting furnace is cooled by using air cooling provided externally of the oxygen supplying apparatus, thereby improving durability to enable melting waste for longer time, and has a simple structure to minimize economic damage due to wear and tear.

### 2. Description of the Related Art

In a nuclear power plant, a protective clothing, PVC, vinyl sheet, waste, waste ion exchange resin, boric acid waste, slurry and a dried material that are produced during operation and maintenance of the nuclear power plant are placed altogether in a melting furnace that uses inductive current heating such that verified waste is generated to minimize an environmental impact as well as emission of a radioactive waste drum is reduced.

Generally, an oxygen supplying apparatus of a melting furnace is an apparatus used for vitrificating waste contained within the melting furnace.

Prior art documents include, for example, Korean Patent No. 10-0507893, titled "Method and Device for Incineration and Vitrification of waste, in particular Radioactive Waste," Korean Patent No. 10-0498881, titled "Treatment Apparatus for Destroying by Burning up and Melting Radioactive Waste and Method the Same," and Korean Utility Model No. 20-0294861 , titled "Treatment Apparatus for Destroying by Burning up and Melting Radioactive Waste."

The above prior art documents discloses providing an oxygen supplying apparatus for supplying oxygen to a melting furnace, wherein water cooling is used to cool the oxygen supplying apparatus to prevent overheating.

However, the prior art oxygen supplying apparatus of the melting furnace has a problem in that the prior oxygen supplying apparatus is cooled by water cooling such that leakage occurs due to damage such as wear and corrosion.

In addition, the damage requires replacement, which increases processing time and costs, thus lowering reliability of the melting furnace.

US 3703279 A discloses a reactor for the refining of molten metals, including a reaction vessel for holding a charge of molten metal. A number of tuyeres extend through an inwardly sloping lower wall portion of the reaction vessel in contact with the heat of molten metal during refining thereof. Each of the tuyeres includes an outer tube and a concentric inner tube. The inner tube is provided with a plurality of ribs which serve to maintain the concentric spacing of the inner and outer tubes.

US 4941646 A discloses an injection lance assembly for introducing a reactive gas into a bath of molten metal comprising a refractory covered tubular lance. The tubular lance comprises a first centrally located tubular conduit extending from a reactive gas side of a manifold to a discharge nozzle at lance tip, a second centrally located tubular conduit coaxially spaced and surrounding the first tubular conduit extending from a coolant side of the manifold to a discharge end located in the lower lance portion, and a third centrally located tubular conduit coaxially spaced and surrounding the first and second tubular conduits extending from a coolant exhaust means to a point located below the discharge end of the second tubular conduit and above the discharge nozzle in the conical shaped lance tip.

US 4550898 A discloses an air cooled refractory lance comprising an elongated tubular refractory body with triangular bore. A secondary tube extends longitudinally of and completely through the refractory body and forms an outlet port for stirring gas or the like. A cross sectionally triangular metal tube is positioned in the bore and a cross sectionally circular tube is positioned in the cross sectionally triangular metal tube. The upper end of the tube is provided with a reducing fitting to which a compressed air hose is attached so that compressed air for cooling may be directed downwardly through the tube. The cooling air will emerge from the bottom of the tube and flow upwardly through three passageways.

US 3976238 A discloses a refractory guide tube for insertion in the wall of a metallurgical furnace to permit reciprocal movement of an elongated rod-shaped member into and out of the interior of the furnace through a central orifice extending through the tube.

US 3488044 A discloses an apparatus for performing a steelmaking process including a lance apparatus and an oxygen furnace. The lance apparatus comprises an outer tubular member through which gaseous oxygen is discharged and an inner tubular member in spaced relation within the outer tubular member. An annular space between the tubular members is divided by a tubular petitioning member forming annular chambers. Cooling fluid, such as water, is introduced by a conduit to the annular chamber and cooling fluid leaves the lance apparatus through conduit connected to the annular chamber.

US 2828956 A discloses an apparatus for the top blowing of oxygen into molten metal. The apparatus comprises two pipes forming an outlet passageway and a pipe through which gas under pressure is led to a nozzle. A water inlet leads to a water passageway around the pipe and within the pipe. The water is led downwardly within the water passageway and then moves up through the passageway to an outlet connection.

US 4449701 A discloses a tuyere for use in a metallurgical vessel comprising a first tuyere pipe adapted to be mounted on the outer metallic shell of the metallurgical vessel for being inserted through a first opening in the shell, a second tuyere pipe extending coaxially through the first pipe and spacers maintaining the pipes in a spaced apart relation. The first tuyere pipe is affixed to the vessel shell by means of a circular flange plate and a mounting member which includes a short cylindrical section affixed to the vessel shell and in a concentric surrounding relation to the opening.

EP 0877203 A1 discloses an air-fuel burner including an outer conduit, an inner fuel conduit and a middle conduit fitted around the inner fuel conduit in the space between the inner and outer conduits. An inner annular passage communicating with a source of oxygen is formed between the inner fuel conduit and the middle conduit. An outer annular passage communicating with a source of air is formed between the middle conduit and the outer conduit.

US 5267850 A discloses a low velocity fuel jet burner comprising a burner for injecting fuel and oxidant into a cavity. The burner comprises a central conduit and an annular conduit or injector which runs coaxially with central conduit. A second annular or coaxial conduit is positioned between the central conduit and the annular coaxial injector conduit. The conduit provides cooling air from an air source through the burner and into the cavity.

US 5217363 A discloses an air-cooled oxygen-gas burner with a burner body formed by three concentrically disposed stainless steel metal tubes, an inner tube, an outer tube and an intermediate tube supported in spaced concentric relationship by metal spacers within a cylindrical housing. The area between the outer tube and the intermediate tube defines an oxygen chamber, while the area between the outer tube and the cylindrical housing defines an air chamber. The cylindrical housing is provided with an air inlet coupling for feeding air in the air chamber about the outer tube for cooling the burner assembly.

FR 2131673 A5 discloses a burner for a melting furnace comprising an inner tube for supplying fuel, a tube for supplying oxygen surrounding the inner tube and a tube for supplying cooling fluid. A perforated plate is provided at the rear end of the tube.

### SUMMARY OF THE INVENTION

Accordingly, the present invention has been made in view of the above problems, and the present invention is to provide an oxygen supplying apparatus of a melting furnace, in which the oxygen supplying apparatus inserted to the melting furnace is cooled by using air cooling provided externally of the oxygen supplying apparatus, thereby improving durability to enable melting waste for longer time, and has a simple structure to minimize economic damage due to wear and tear.

An oxygen supplying apparatus of a melting furnace according to claim 1 is provided.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a front view illustrating a cross section of a part of an oxygen supplying apparatus of a melting furnace according to the present invention; and
FIG. 2 is a plan view illustrating a connection unit provided between an air cooling member and an oxygen supplying member according to the present invention.

### DETAILED DESCRIPTION OF THE INVENTION

Exemplary embodiments of the present invention will be described herein below with reference to the accompanying drawings.

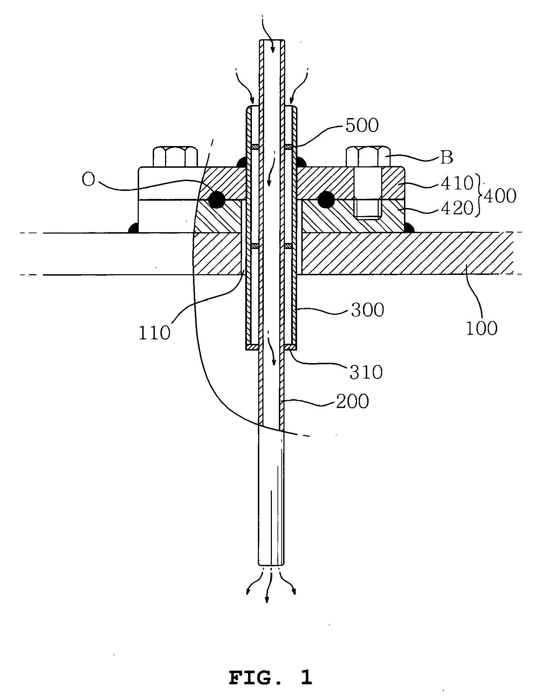

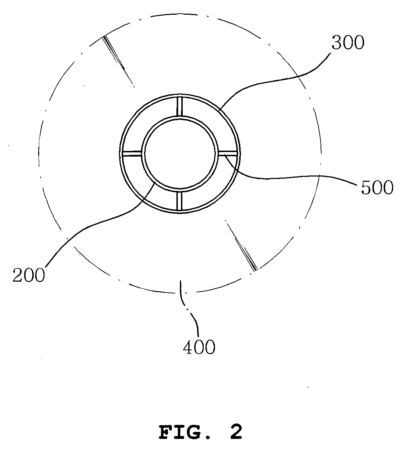

An oxygen supplying apparatus of a melting furnace according to the present invention is inserted within the melting furnace, as shown in FIG. 1, and a connection unit is provided between an air cooling member and an oxygen supplying member, as shown in FIG. 2.

As shown in FIG. 1, the oxygen supplying apparatus includes a melting furnace 100, an oxygen supplying member 200 and an air cooling member 300.

The melting furnace 100 is formed in a cylindrical shape to receive radioactive and nonradioactive waste therein.

Specifically, the melting furnace 100 includes a container for containing the waste to be melted and a cover for sealing the contained waste.

The melting furnace 100 is provided with the oxygen supplying member 200 to supply oxygen to improve combustion of the waste contained within the melting furnace 100 or generates a bubble in the waste contained within the melting furnace 100 to uniformly melt the waste.

The oxygen supplying member 200 is inserted to an interior of the melting furnace 100 by penetrating through a through hole 110 formed on the melting furnace 100, wherein a diameter of the oxygen supplying member 200 is formed to be smaller than that of the through hole 110.

Specifically, the oxygen supplying member 200 is formed to be elongated along a longitudinal direction to be longer than the air cooling member 300, which will be described below. A part of the oxygen supplying member 200 passes an upper portion of the air cooling member 300 to be exposed to an outside and another part of the oxygen supplying member 200 inserted to the interior of the melting furnace 100 passes a lower portion of the air cooling member 300.

The oxygen supplying member 200 may be formed in a shape of a pipe that is open at both ends and comprise stainless steel.

Accordingly, the waste received in the melting furnace 100 may be stirred by the oxygen supplying member 200, thereby increasing a processing capacity.

The air cooling member 300 is provided in the through hole 110 formed on the melting furnace 100 and mounted on the oxygen supplying member 200 to allow an outside air to be entered thereto.

Specifically, the air cooling member 300 is formed to have a diameter greater than that of the oxygen supplying member 200 and a part of the oxygen supplying member 200 is inserted within the air cooling member 300.

While the oxygen supplying member 200 is inserted within the air cooling member 300, the oxygen supplying member 200 and the air cooling member 300 are connected to each other by using a plurality of connection units 500.

The air cooling member 300 is formed to have an upper portion that is open and a lower portion that is closed by a closing unit 310 such that the outside air is entered through the open upper portion thereof.

The air introduced to the air cooling member 300 is circulated to cool the oxygen supplying member 200 inserted within the melting furnace 100.

Accordingly, the oxygen supplying member 200 may maintain durability by using the air cooling member 300 even in an extreme circumstance of high temperature.

A fixing member 400 is mounted and fixed to an upper portion of the melting furnace 100 and is provided at an outer surface of the air cooling member 300.

The fixing member 400 comprises an upper fixing member 410 and a lower fixing member 420 and is provided to surround the outer surface of the air cooling member 300.

The lower fixing member 420 is mounted on the upper portion of the melting furnace 100 and the lower fixing member 420 is fixed to the melting furnace 100 by welding.

The upper fixing member 410 is mounted on an upper portion of the lower fixing member 420, and a separate fixing bolt B is rotated to securely fix the upper fixing member 410 to the lower fixing member 420.

An 0-ring, which is designated by a reference character "O" in Fig. 1, is interposed between the upper fixing member 410 and the lower fixing member 420 to maintain sealing within the melting furnace 100.

Accordingly, the air cooling member 300 is securely fixed by the fixing member 400.

The oxygen supplying member 200 is supported by using a plurality of the connection units 500 positioned between the oxygen supplying member 200 and the air cooling member 300.

As shown in FIG. 2, by using the connection unit 500, the air cooling member 300 and the oxygen supplying member 200 inserted within the air cooling member 300 are separated from each other to maintain a predetermined interval therebetween.

The connection unit 500 is formed in a shape of a cylinder or a wide plate and is fixed to an inner surface of the air cooling member 300 and the outer surface of the oxygen supplying member 200.

Thus, a predetermined interval is maintained between the oxygen supplying member 200 and the air cooling member 300 by the connection unit 500 so that cooling by the air cooling member 300 is efficiently performed.

A condition of use and an operation of the oxygen supplying apparatus of the melting furnace that is configured as described above according to the present invention are described below.

First, as shown in FIGS. 1 and 2, the melting furnace 100 containing the waste to be vitrified, the oxygen supplying member 200, and the air cooling member 300 are standardized and modularized in a factory beforehand, thereby improving work efficiency at a work site.

The melting furnace 100 containing the waste includes the air cooling member 300 provided in the through hole 110 formed on the melting furnace 100 and the oxygen supplying member 200 that is modularized within the air cooling member 300.

The fixing member 400 is mounted on the upper portion of the melting furnace 100 and surrounds the outer surface of the air cooling member 300.

The fixing member 400 is mounted on the melting furnace 100 and is fastened to the melting furnace 100 by using the separate fixing bolt B.

By supplying oxygen into the melting furnace 100 that is assembled as above, the waste may be efficiently melted.

According to the present invention, cooling is performed by an air cooling provided outside the air supplying apparatus, and thus the waste may be melted during a longer period by using the durability of the oxygen supplying apparatus.

Also, economic damage due to wear and tear may be minimized by using a simplified structure, thereby improving reliability.

In the above, although the embodiments of the present invention have been described with reference to the accompanying drawings, a person skilled in the art should apprehend that the present invention can be embodied in other specific forms. Thus, the embodiments described above should be construed as exemplary in every aspect and not limiting.

## Claims

1. An oxygen supplying apparatus of a melting furnace (100), the oxygen supplying apparatus comprising:
a through hole (110) formed in a wall of the melting furnace (100);
an air cooling member (300) having a pipe shape, passing through the through hole (110) and extending inside and outside the melting furnace (100), the air cooling member (300) having a first end and a second end, the first end being open to an outside of the melting furnace (100) and allowing an outside air to enter into the air cooling member (300), the second end being closed in an inside of the melting furnace (100);
an oxygen supplying member (200) having a pipe shape and passing through the air cooling member (300), the oxygen supplying member (200) being longer than the air cooling member (300) and having a first end and a second end, the first end of the oxygen supplying member (200) being open to introduce oxygen and extended out from the first end of the air cooling member (300), the second end of the oxygen supplying member (200) being open to the inside of the melting furnace (100) and extended out from the second end of the air cooling member (300), thereby allowing the oxygen to enter into the melting furnace (100);
a plurality of connection units (500) positioned between the air cooling member (300) and the oxygen supplying member (200), the plurality of connection units (500) fixing the oxygen supplying member (200) in the air cooling member (300);
a closing unit (310) provided in the second end of the air cooling member (300), the closing unit (310) closing an inside end of a space between an inner surface of the air cooling member (300) and an outer surface of the oxygen supplying member (200) such that the outside air entered into the space through the first end of the air cooling member (300) circulates in the space;
a lower fixing member (420) mounted on an outer surface of the melting furnace (100), fixed on the outer surface of the melting furnace (100) by a welding and having a hole in a center, the hole of the lower fixing member (420) having a diameter greater than a diameter of the air cooling member (300) such that an outer surface of the air cooling member (300) does not directly contact with the inner surface of the hole of the lower fixing member (420), the hole of the lower fixing member (420) being arranged to have the same central axis with the through hole (110) of the melting furnace (100); and
an upper fixing member (410) mounted on the lower fixing member (420), fixed on the lower fixing member (420) by a bolt (B) and having a hole in a center, the upper fixing member (410) fixing the air cooling member (300) in the hole of the upper fixing member (410);
a ring (O) interposed between the lower fixing member (420) and the upper fixing member (410) to seal the melting furnace (100);
wherein a diameter of the through hole (110) of the wall of the melting furnace (100) is greater than the diameter of the air cooling member (300) such that the outer surface of the air cooling member (300) does not directly contact with the inner surface of the through hole (110) of the wall of the melting furnace (100); and
wherein the space between the inner surface of the air cooling member (300) and the outer surface of the oxygen supplying member (200) includes only the connection units (500), and the oxygen supplying member (200) includes nothing thereinside.

## Patentansprüche

1. Sauerstoffzufuhreinrichtung eines Schmelzofens (100), wobei die Sauerstoffzufuhreinrichtung Folgendes umfasst:
ein Durchgangsloch (110), das in einer Wand des Schmelzofens (100) ausgebildet ist;
ein Luftkühlelement (300), das eine Rohrform aufweist und durch das Durchgangsloch (110) geht und sich innerhalb und außerhalb des Schmelzofens (100) erstreckt, wobei das Luftkühlelement (300) ein erstes Ende und ein zweites Ende aufweist, wobei das erste Ende zu einer Außenseite des Schmelzofens (100) offen ist und ermöglicht, dass eine Außenluft in das Luftkühlelement (300) eintritt, wobei das zweite Ende in einer Innenseite des Schmelzofens (100) geschlossen ist;
ein Sauerstoffzufuhrelement (200), das eine Rohrform aufweist und durch das Luftkühlelement (300) geht, wobei das Sauerstoffzufuhrelement (200) länger als das Luftkühlelement (300) ist und ein erstes Ende und ein zweites Ende aufweist, wobei das erste Ende des Sauerstoffzufuhrelements (200) offen ist, um Sauerstoff einzuführen und sich aus dem ersten Ende des Luftkühlelements (300) heraus erstreckt, wobei das zweite Ende des Sauerstoffzufuhrelements (200) zur Innenseite des Schmelzofens (100) offen ist und sich aus dem zweiten Ende des Luftkühlelements (300) heraus erstreckt und dadurch ermöglicht wird, dass der Sauerstoff in den Schmelzofen (100) eintritt;
mehrere Verbindungseinheiten (500), die zwischen dem Luftkühlelement (300) und dem Sauerstoffzufuhrelement (200) angeordnet sind, wobei die mehreren Verbindungseinheiten (500) das Sauerstoffzufuhrelement (200) in dem Luftkühlelement (300) befestigen;
eine Schließeinheit (310), die in dem zweiten Ende des Luftkühlelements (300) bereitgestellt ist, wobei die Schließeinheit (310) ein inneres Ende eines Raums zwischen einer inneren Oberfläche des Luftkühlelements (300) und einer äußeren Oberfläche des Sauerstoffzufuhrelements (200) verschließt, sodass die Außenluft, die in den Raum durch das erste Ende des Luftkühlelements (300) eingetreten ist, in dem Raum zirkuliert;
ein unteres Befestigungselement (420), das an einer äußeren Oberfläche des Schmelzofens (100) montiert ist und an der äußeren Oberfläche des Schmelzofens (100) durch eine Schweißung befestigt ist und ein Loch in einem Zentrum aufweist, wobei das Loch des unteren Befestigungselements (420) einen Durchmesser von mehr als einem Durchmesser des Luftkühlelements (300) aufweist, sodass eine äußere Oberfläche des Luftkühlelements (300) die innere Oberfläche des Lochs des unteren Befestigungselements (420) nicht direkt kontaktiert, wobei das Loch des unteren Befestigungselements (420) derart angeordnet ist, dass es die gleiche Mittelachse mit dem Durchgangsloch (110) des Schmelzofens (100) hat; und
ein oberes Befestigungselement (410), das an dem unteren Befestigungselement (420) montiert ist und an dem unteren Befestigungselement (420) durch einen Bolzen (B) befestigt ist und ein Loch in einem Zentrum aufweist, wobei das obere Befestigungselement (410) das Luftkühlelement (300) in dem Loch des oberen Befestigungselements (410) befestigt;
einen Ring (O), der zwischen dem unteren Befestigungselement (420) und dem oberen Befestigungselement (410) angeordnet ist, um den Schmelzofen (100) abzudichten;
wobei ein Durchmesser des Durchgangslochs (110) der Wand des Schmelzofens (100) größer als der Durchmesser des Luftkühlelements (300) ist, sodass die äußere Oberfläche des Luftkühlelements (300) die innere Oberfläche des Durchgangslochs (110) der Wand des Schmelzofens (100) nicht direkt kontaktiert; und
wobei der Raum zwischen der inneren Oberfläche des Luftkühlelements (300) und der äußeren Oberfläche des Sauerstoffzufuhrelements (200) nur die Verbindungseinheiten (500) aufweist und das Sauerstoffzufuhrelement (200) nichts in seinem Inneren enthält.

## Revendications

1. Dispositif d'injection d'oxygène dans un four à vitrification (100), le dispositif d'injection d'oxygène comprenant :
un trou traversant (110) formé dans une paroi du four à vitrification (100) ;
un élément de refroidissement d'air (300) possédant une forme de conduit, passant à travers le trou traversant (110) et s'étendant à l'intérieur et à l'extérieur du four à vitrification (100), l'élément de refroidissement d'air (300) possédant une première extrémité et une seconde extrémité, la première extrémité étant ouverte vers un extérieur du four à vitrification (100) et permettant à un air extérieur d'entrer à l'intérieur de l'élément de refroidissement d'air (300), la seconde extrémité étant fermée dans un intérieur du four à vitrification (100) ;
un élément d'injection d'oxygène (200) possède une forme de conduit et passant à travers l'élément de refroidissement d'air (300), l'élément d'injection d'oxygène (200) étant plus long que l'élément de refroidissement d'air (300) et possédant une première extrémité et une seconde extrémité, la première extrémité de l'élément d'injection d'oxygène (200) étant ouverte pour produire de l'oxygène et étendue au-delà de la première extrémité de l'élément de refroidissement d'air (300), la seconde extrémité de l'élément d'injection d'oxygène (200) étant ouverte vers l'intérieur du four à vitrification (100) et étendue au-delà de la seconde extrémité de l'élément de refroidissement d'air (300), permettant ainsi à l'oxygène d'entrer à l'intérieur du four à vitrification (100) ;
une pluralité d'unités de connexion (500) positionnées entre l'élément de refroidissement d'air (300) et l'élément d'injection d'oxygène (200), la pluralité d'unités de connexion (500) fixant l'élément d'injection d'oxygène (200) dans l'élément de refroidissement d'air (300) ;
une unité de fermeture (310) fournie dans la seconde extrémité de l'élément de refroidissement d'air (300), l'unité de fermeture (310) fermant une extrémité intérieure d'un espace compris entre une surface interne de l'élément de refroidissement d'air (300) et une surface extérieure de l'élément d'injection d'oxygène (200) de sorte que l'air extérieur entré à l'intérieur de l'espace à travers la première extrémité de l'élément de refroidissement d'air (300) circule dans l'espace ;
un élément de fixation inférieur (420) monté sur une surface externe du four à vitrification (100), fixé sur la surface externe du four à vitrification (100) par une soudure et possédant un trou dans un centre, le trou de l'élément de fixation inférieur (420) possédant un diamètre plus important qu'un diamètre de l'élément de refroidissement d'air (300) de sorte qu'une surface externe de l'élément de refroidissement d'air (300) ne vient pas directement en contact avec la surface interne du trou de l'élément de fixation inférieur (420), le trou de l'élément de fixation inférieur (420) étant arrangé pour avoir le même axe central avec le trou traversant (110) du four à vitrification (100) ; et
un élément de fixation supérieur (410) monté sur l'élément de fixation inférieur (420), fixé sur l'élément de fixation inférieur (420) par un boulon (B) l'élément de refroidissement d'air (300) et possédant un trou dans un centre, l'élément de fixation supérieur (410) fixant l'élément de refroidissement d'air (300) dans le trou de l'élément de fixation supérieur (410) ;
un joint (O) interpose entre l'élément de fixation inférieur (420) et l'élément de fixation supérieur (410) pour sceller le four à vitrification (100) ;
dans lequel un diamètre du trou traversant (110) de la paroi du four à vitrification (100) est plus important que le diamètre de l'élément de refroidissement d'air (300) de sorte que la surface externe de l'élément de refroidissement d'air (300) ne vient pas directement en contact avec la surface interne du trou traversant (110) de la paroi du four à vitrification (100) ; et
dans lequel l'espace entre la surface interne de l'élément de refroidissement d'air (300) et la surface externe de l'élément d'injection d'oxygène (200) inclut seulement les unités de connexion (500), et l'élément d'injection d'oxygène (200) n'inclut rien à l'intérieur de celui-ci.
